(19) Europäisches Patentamt

European Patent Office

Office européen des brevets

(11) **EP 1 514 723 A2**

(12) **EUROPÄISCHE PATENTANMELDUNG**

(43) Veröffentlichungstag:
**16.03.2005 Patentblatt 2005/11**

(51) Int Cl.⁷: **B60L 15/20**

(21) Anmeldenummer: **04020812.6**

(22) Anmeldetag: **02.09.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **13.09.2003 DE 10342445**

(71) Anmelder: **LuK Lamellen und Kupplungsbau Beteiligungs KG**
**77813 Bühl (DE)**

(72) Erfinder:
• **Zimmermann, Martin**
  **77880 Sasbach (DE)**
• **Gerhart, Jürgen**
  **77767 Appenweier (DE)**
• **Acker, Christian**
  **67760 Gambsheim (FR)**
• **Pfund, Thomas**
  **76547 Leiberstung (DE)**

(54) **Verfahren zur Steuerung des in einer Stromstrecke mit einem Elektromotor, einer Steuerschaltung und Anschlusselementen fliessenden Stroms**

(57)   Es wird ein Verfahren vorgeschlagen zur Steuerung des in einer Stromstrecke mit einem Elektromotor und einer Steuerschaltung sowie Anschlusselementen in einem Zeitabschnitt fließenden Stroms, wobei nach dem Verfahren anhand eines in einem ersten Zeitabschnitt gemessenen Stromwerts der Gesamtwiderstand der Stromstrecke bestimmt wird und der Motorstrangstrom eines folgenden zweiten Zeitabschnitts anhand des Gesamtwiderstands und eines Sollmotorstrangstroms gesteuert wird.

**Fig. 2**

**Beschreibung**

Die vorliegende Erfindung betrifft ein Verfahren zur Steuerung des in einer Stromstrecke mit einem Elektromotor und einer Steuerschaltung sowie Anschlusselementen in einem Zeitabschnitt fließenden Stroms nach dem Oberbegriff des Anspruches 1.

Elektromotoren werden üblicherweise mit einer Steuerschaltung angesteuert, um die Betätigung der vom Elektromotor angetriebenen Bauteile den anforderungsspezifischen Profilen der Bauteile entsprechend anzusteuern. Zwischen der Steuerung und dem Elektromotor sind Anschlusselemente in der Form von Stecker- und Buchsenverbindungen und Anschlussleitungen und dergleichen vorgesehen. Die Steuerschaltung sowie der Elektromotor werden aus einer Stromquelle gespeist, so dass auch von der Stromquelle zu den genannten Verbrauchern entsprechende Anschlusselemente vorliegen. Zum Schutz der in der Steuerschaltung regelmäßig vorhandenen Leistungstransistoren sowie der gesamten Stromstrecke ist es erforderlich, den vom Elektromotor aufgenommenen Strom zu begrenzen.

Nicht anders verhält es sich, wenn der Elektromotor Teil einer Antriebskette zur Betätigung der Kupplung und/ oder des Getriebes eines Kraftfahrzeugs ist. In einem solchen Anwendungsfall kommt ergänzend noch hinzu, dass die Stromstrecke aufgrund der unterschiedichen Betriebszustände des Kraftfahrzeugs starken Temperaturschwankungen unterworfen ist, wodurch sich auch die in der Stromstrecke auftretenden elektrischen Widerstände erheblich verändern. Diese temperaturabhängige Veränderung der Widerstände führt nun auch dazu, dass die von den Leistungstransistoren der Steuerschaltung geschalteten Stromwerte nicht nur vom Elektromotor induzierten lastabhängigen Veränderungen unterworfen sind, sondern auch temperaturbedingten Veränderungen.

Diese Schilderung macht deutlich, dass der Motorstrom zum Schutz der Leistungstransistoren sowie der Belastung des Bordnetzes eines Kraftfahrzeugs wegen Temperaturabhängigkeiten und kleinen variablen Motorwiderstandswerten kontrolliert und begrenzt werden muss.

Um diese Problematik in den Griff zu bekommen, ist es nun grundsätzlich möglich, eine Stromregelung vorzusehen, die aber voraussetzt, dass die Reglerzeitscheibe um ein mehrfaches kleiner ist als die elektrische Zeitkonstante des Antriebs L/R, wobei mit L die Induktivität und R der Gesamtwiderstand bezeichnet werden.

Wenn nun diese Voraussetzungen nicht erfüllt ist, dass die Reglerzeitscheibe wesentlich kleiner ist als die elektrische Zeitkonstante, so erfordert dies kostenaufwendige Maßnahmen in der Form zusätzlicher elektronischer Komponenten und aufwendiger Motorstrommessungen.

Im vorstehend geschilderten Anwendungsfall der Verwendung eines Elektromotors zur Betätigung der Kupplung oder des Getriebes eines Kraftfahrzeugs befinden sich regelmäßig mehrere Elektromotoren in der Stromstrecke, so dass die genannten Motorstrommessungen an den einzelnen Elektromotoren durchgeführt werden müssten, was den Aufwand selbstverständlich erhöht.

Zur Verringerung des Aufwands wäre es daher möglich, den in der Stromstrecke zulässigen Stromwert auf einen einstellbaren Wert zu begrenzen, wobei aber dann nach wie vor für jeden einzelnen Elektromotor eine eigene Strommessung implementiert werden müsste.

Aufgrund von im mechanischen Antriebsstrang des Elektromotors und eines mit diesem etwaig verbundenen Getriebes zur Betätigung beispielsweise eines Parallelschaltgetriebes eines Kraftfahrzeugs vorhandener Toleranzen ändern sich die Stromwerte auch noch aufgrund dieser auch verschleißbedingt sich verändernden Toleranzen zusätzlich, so dass nunmehr deutlich geworden sein dürfte, dass ein entsprechender Bedarf besteht an einem Verfahren zur Steuerung des in einer Stromstrecke mit einem Elektromotor und einer Steuerschaltung sowie Anschlusselementen in einem Zeitabschnitt fließenden Stroms.

Der vorliegenden Erfindung liegt nunmehr die Aufgabe zugrunde, ein derartiges Verfahren zu schaffen, mit dem der zur Steuerung und Begrenzung des Stroms erforderliche Aufwand verringert werden kann.

Die Erfindung schafft nun zur Lösung dieser Aufgabe ein Verfahren zur Steuerung des in einer Stromstrecke mit einem Elektromotor und einer Steuerschaltung sowie Anschlusselementen in einem Zeitabschnitt fließenden Stroms, wobei nach dem Verfahren anhand eines in einem ersten Zeitabschnitt gemessenen Stromwerts der Gesamtwiderstand der Stromstrecke bestimmt wird und der Motorstrangstrom eines folgenden zweiten Zeitabschnitts anhand des Gesamtwiderstands und eines Sollmotorstrangsstroms gesteuert wird.

Die vorstehend definierten ersten und zweiten Zeitabschnitte unterscheiden sich voneinander, müssen nicht aber notwendigerweise direkt aufeinander folgen. Mit dem erfindungsgemäßen Verfahren wird zunächst ein Stromwert gemessen und daraus der Gesamtwiderstand der Stromstrecke bestimmt. Auf der Basis dieser dann bekannten Kenngrößen wird der Motorstrangstrom eines folgenden Zeitabschnitts anhand des Gesamtwiderstands und eines Solmotorstrangstroms gesteuert. Es bedeutet dies mit anderen Worten, dass mit dem erfindungsgemäßen Verfahren der gemessene Gesamtwiderstand der Stromstrecke zur Bestimmung des Motorstrangstroms herangezogen wird, so dass mit dieser Steuerung der Motorstrangstrom für beispielsweise mehrere Zeitabschnitte bestimmt werden kann, bis sich aufgrund der anwendungsspezifisch gegebenen Voraussetzungen eine Gelegenheit gibt, den Stromwert ein nächstes Mal zu messen und daraus den Gesamtwiderstand ein nächstes Mal zu bestimmen, der dann wiederum als Ausgangswert für die Bestimmung des Stromwertes in wiederum darauf folgenden Zeitabschnitt verwendet wird, so dass mit der auch in unregelmäßigen Zeitabständen möglichen neuen Bestimmung des Gesamtwiderstandes wieder ein Ausgangswert für die Bestimmung des nachfolgend festzulegenden Motorstrangstroms zur Verfügung steht und somit ein Abgleich möglich ist.

Wenn sich nun aufgrund temperaturbedingter Veränderungen der Widerstände der einzelnen Elemente in der Stromstrecke, d.h. also des Elektromotors, der Steuerschaltung, Anschlussleitungen, Steckern, Buchsen und sonstigen Bauteilen in der Stromstrecke, der Gesamtwiderstand der Stromstrecke verändert, dann wird mittels des erfindungsgemäßen Verfahrens die Möglichkeit eines Abgleichs geschaffen, derart, dass Veränderungen des Gesamtwiderstands in das erfindungsgemäße Steuerverfahren einfließen und somit einerseits temperaturbedingten Veränderungen des Gesamtwiderstands Rechnung getragen werden kann als auch Veränderungen in der mechanischen Übertragungsstrecke, also beispielsweise Veränderungen der einzelnen Bauteiltoleranzen, da diese Veränderungen zu Veränderungen der gemessenen Stromwerte führen, was wiederum zu einer Veränderung des Gesamtwiderstandes führt und somit mit dem erfindungsgemäßen Verfahren nicht nur temperaturbedingten Veränderungen des Gesamtwiderstands, sondern auch Toleranzveränderungen, beispielsweise verschleißbedingten Veränderungen in der mechanischen Übertragungsstrecke vom Elektrorrotor, über das angeschlossene Getriebe, bis beispielsweise zur Kupplung oder dem Parallelschaltgetriebe des Fahrzeugs Rechnung getragen werden kann.

Dabei kann der Motorstrangstrom des zweiten oder folgender Zeitabschnitte mittels des Motortastverhältnisses anhand folgender Beziehung bestimmt werden:

$$PWM\_soll = \frac{I\text{-}soll\ \sqrt{Rg\_ist + (L \cdot p \cdot \omega)^2} + ke \cdot \omega}{U\_bat} \qquad [G5]$$

Es bedeutet dies mit anderen Worten, dass anhand der für die Bewältigung der jeweiligen Aufgabe des Elektromotors benötigten Motorkraft bzw. des vom Motor abzugebenden Sollmotormoments und dem daraus sich ergebenden Sollmotorstrangstrom I_soll das für die Bereitstellung des erforderlichen Motormoments notwendige Motortastverhältnis PWM_soll nach der vorstehend wiedergegebenen Gleichung ermittelt werden kann.

Wie es ohne weiteres ersichtlich ist, geht in die Gleichung mit Rg_ist der anhand des gemessenen Stromwerts eines vorherigen Zeitabschnitts bekannte Gesamtwiderstand in die Ermittlung des Motortastverhältnisses ein sowie mit L die Motorinduktivität, p die Motorpolpaarzahl, ω die Rotordrehzahl mit Richtungsvorzeichen und mit ke die Motorkonstante, mit U_bat wird die Versorgungsspannung der Steuerschaltung bezeichnet. Nach der Erfindung wird auf der Basis des gemessenen Stromwerts der Gesamtwiderstand der Stromstrecke ermittelt werden kann, der dann in die Bestimmung des im nächsten oder folgender Zeitabschnitte, bis zu einem neuerlichen Abgleich des Gesamtwiderstands, in die Bestimmung des Motorstrangstroms eingeht. Der nach dem erfindungsgemäßen Verfahren bestimmte Gesamtwiderstand wird nach der Erfindung solange als Gesamtwiderstand zur Steuerung des Motorstrangstroms verwendet, bis durch einen Abgleichvorgang ein neuer Gesamtwiderstand bestimmt wird.

Wie es schon erläutert wurde, hängt der von den einzelnen Komponenten bzw. Bauteilen in der Stromstrecke dem Stromfluss entgegengebrachte Widerstand von der Temperatur der einzelnen Bauteile bzw. Bestandteile ab.

Nach einer Weiterbildung der Erfindung ist es daher vorgesehen, dass der Gesamtwiderstand in Zeitabschnitten zwischen Abgleichvorgängen mittels eines Temperaturkorrekturkoeffizienten korrigiert wird.

Es bedeutet dies mit anderen Worten, dass auch zwischen einzelnen Abgleichvorgängen zur Ermittlung eines aktuellen Gesamtwiderstands der Stromstrecke Temperaturveränderungen und sich daraus ergebender Veränderungen der Widerstände der einzelnen Bauteile bzw. Komponenten in der Stromstrecke dadurch Rechnung getragen werden kann, dass der Gesamtwiderstand mittels eines beispielsweise vorab empirisch ermittelten Temperaturkorrekturkoeffizienten korrigiert wird.

Nach einer Weiterbildung des Verfahrens ist es dabei vorgesehen, dass der Temperaturkorrekturkoeffizient als Quotient eines gemessenen Gesamtwiderstands und eines errechneten Gesamtwiderstands bestimmt wird. Damit ist es möglich, temperaturbedingten Veränderungen des Gesamtwiderstands dadurch Rechnung zu tragen, dass ein Gesamtwiderstand ermittelt wird als Summe der Widerstände der Anschlusselemente sowie der Steuerschaltung und des Elektromotors, d.h. also sämtlicher in der Stromstrecke einen Widerstand hervorrufender Komponenten, Bauteile, Bestandteile und dergleichen. Dieser errechnete Gesamtwiderstand wird mit einem aus einer Strommessung eruierten gemessenen Gesamtwiderstand verglichen und geht so in die Korrektur des Gesamtwiderstands in Zeitabschnitten zwischen einzelnen Abgleichvorgängen ein.

Wenn daher an unterschiedlichen Orten der Stromstrecke unterschiedliche Temperaturen herrschen, so ist es möglich, sich den daraus ergebenden unter-schiedlichen temperaturbedingten Veränderungen der Widerstände der einzelnen Bestandteile Rechnung zu tragen. Zu diesem Zweck ist es lediglich erforderlich, dass zur Ermittlung der Widerstände die Temperaturen der Anschlusselemente, der Steuerschaltung und des Elektromotors sowie weiterer Bestandteile, Komponenten, Bauteile und dergleichen in der Stromstrecke zu ermitteln und daraus die Widerstände der einzelnen vorstehend erwähnten Bestandteile der Stromstrecke zu ermitteln.

Diese so ermittelten Widerstände gehen dann in die Summenbildung des errechneten Gesamtwiderstandes additiv ein.

Nach einer Weiterbildung der Erfindung ist es vorgesehen, dass die Messung des Stromwerts mit einer Strommesseinrichtung der Steuerschaltung vorgenommen wird. Die Steuerschaltung kann zur Vermeidung eines Kurzschlusses eine Kurzschlussschutzfunktion besitzen, mit der aktuelle Stromwerte gemessen werden können, aus denen sich dann der Gesamtwiderstand der Stromstrecke bestimmen lässt.

Das erfindungsgemäße Verfahren lässt sich zur Begrenzung des in einem Elektromotor und seiner Steuerschaltung fließenden Stroms einsetzen und kann darüber hinaus auch zur Systemüberwachung herangezogen werden, da, beispielsweise empirisch ermittelt bekannt sein kann, dass sich die Motorparameter des Elektromotors nur innerhalb bestimmter Fenster, d.h. also Grenzen, ändern dürfen und somit ein Überschreiten der Grenzwerte durch die Motorparameter darauf hindeutet, dass sich in dem elektrischen Antrieb, in den der Elektromotor integriert ist, ein Fehler eingeschlichen hat bzw. der Antrieb nicht mehr einwandfrei funktioniert, was beispielsweise daraus abgeleitet werden kann, dass sich über nachfolgende Zeitabschnitte ein Langzeittrend in Richtung der zulässigen Grenzen bzw. Fenster der Motorparameter ergibt und somit das künftige Auftreten eines Fehlers wahrscheinlich wird.

Schließlich ist es nach der Erfindung vorgesehen, dass das Verfahren zur Bestimmung des in einer Stromstrecke mit einem Elektromotor und einer Steuerschaltung sowie Anschlusselementen fließenden Stroms angewandt wird, wobei der Elektromotor ein Betätigungsmotor einer Kupplung oder ein Betätigungsmotor eines automatisierten Getriebes eines Fahrzeugs ist.

Die Erfindung wird im folgenden anhand der Zeichnung näher erläutert. Diese zeigt in

Fig. 1 ein Systemschaubild mit mehreren an einer gemeinsamen Stromversorgung angeschlossenen Elektromotoren; und

Fig. 2 ein schematisches Ablaufdiagramm zur Erläuterung einer Anwendung des erfindungsgemäßen Verfahrens.

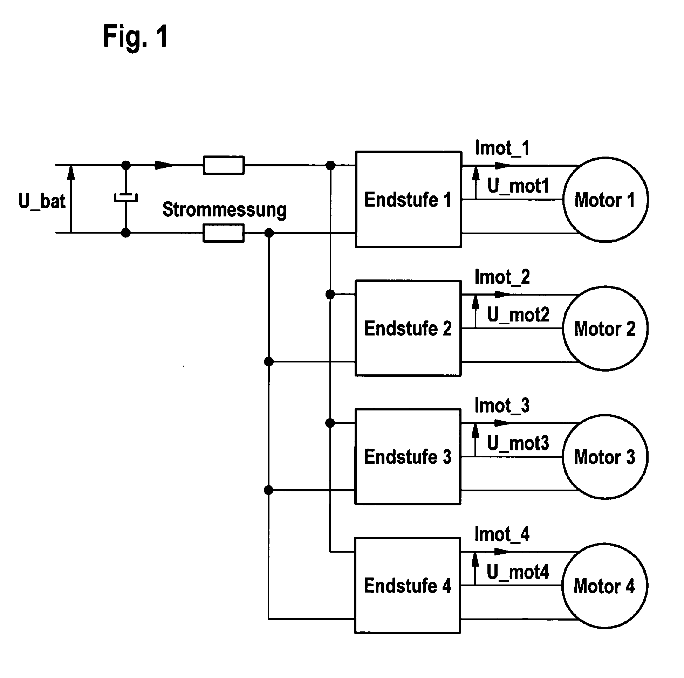

Fig. 1 der Zeichnung zeigt ein Systemschaubild mit mehreren an einer gemeinsamen Stromversorgung angeschlossenen Motoren, Motor 1, Motor 2, Motor 3 und Motor 4, die jeweils eigene, mit Endstufe 1, Endstufe 2, Endstufe 3 und Endstufe 4 bezeichnete Steuerschaltungen besitzen.

Mit U_bat wird die an den einzelnen Steuerschaltungen anliegende Versorgungsspannung bezeichnet und mit IDC_g wird der in der Gesamtstrecke fließende Gesamtstrom bezeichnet.

Da mit IDC_g der Gesamtstrom der Anordnung bezeichnet ist, ist es ohne weiteres klar, dass IDC_g dem Motorstrangstrom des Motor 1 Imot_1 entspricht, wenn der Motor 2, Motor 3 und Motor 4 nicht bestromt werden. Es bedeutet dies mit anderen Worten, dass in einem Zeitabschnitt, zu dem der Motor 2, der Motor 3 und der Motor 4 gerade nicht bestromt werden, mittels der durch die Endstufe 1 vorgenommenen Strommessung der Stromwert in der Stromstrecke, Anschlusselemente, Endstufe 1 und Motor 1 gemessen werden kann, der dem Motorstrangstrom Imot_1 entspricht.

In hierzu ähnlicher Weise entspricht der in der Endstufe 2 und dem Motor 2 fließende Strom Imot_2 dem von der Endstufe 2 gemessenen Gesamtstrom IDC_g, wenn der Motor 1, der Motor 3 und der Motor 4 gerade nicht bestromt werden. Ähnliches gilt auch bezüglich der Motorstrangströme Imot_3 und Imot 4.

Ganz allgemein entspricht der im Motor und in der Steuerschaltung fließende Strom I_mot folgender Beziehung:

$$I\_mot = \frac{Motorklemmenspannung\ -\ Gegeninduzierte\ Motorspannung}{Gesamtimpedanz} \qquad \text{[G1']}$$

Dies heißt mit anderen Worten, dass sich der im Motor und in der Steuerschaltung fließende Strom I_mot bestimmt als der Quotient aus der um die gegeninduzierte Motorspannung reduzierte Motorklemmenspannung und der Gesamtimpedanz.

Als Gesamtimpedanz wird in diesem Fall der Ohmsche Gesamtwiderstand RG und die Motorinduktivität berücksichtigt, d.h. also

$$I\_mot = \frac{Umot\ -\ ke \cdot \omega}{\sqrt{Rg^2 + (Lp\omega)^2}} \qquad \text{[G1]}$$

wobei mit Umot die Motorklemmenspannung bezeichnet wird, ke entspricht der Motorkonstanten in Vs/rad, $\omega$ entspricht der Rotordrehzahl in U/min mit Richtungsvorzeichen, Rg entspricht dem Gesamtwiderstand einer Antriebskette, der sich also zusammensetzt aus den Widerständen der einzelnen Bestandteile, Komponenten und Bauteile, also Stecker, Kontakte, Messwiderstände, Zuleitungswiderstände, Steuergerätewiderstände und dem Motorklemmenwiderstand. L entspricht der Motorinduktivität und p entspricht der Motorpolpaarzahl.

Nach einer vereinfachten Ausführungsform des erfindungsgemäßen Verfahrens wäre es auch möglich, in die Gesamtimpedanz nur den Ohmschen Widerstand Rg einfließen zu lassen und die Motorinduktivität zu vernachlässigen.

Nachdem nun der gemessene Stromwert I_mess bekannt ist, ergibt sich der Motorstrangstrom bzw. der in der Steuerschaltung fließende Strom zu:

$$I\_mot = I\_mess/PWM\_ist \hspace{3cm} [G2]$$

d.h. also, der Motorstrangstrom I_mot ergibt sich als Quotient aus dem gemessenen Stromwert I_mess und dem Ist-Tastverhältnis PWM_ist.

Die am Motor anliegende Klemmenspannung U_mot ergibt sich als Produkt aus der Versorgungsspannung der Steuerelektronik und dem Ist-Tastverhältnis, d.h.

$$U\_mot = U\_bat*PWM\_ist \hspace{3cm} [G3].$$

Der Gesamtwiderstand der jeweiligen Stromstrecke kann dann bestimmt werden, wenn der Stromwert der einzelnen Stromstrecke gemessen worden ist, also ein Stromwert gemessen wurde und während der Messung die anderen Motoren nicht bestromt wurden, so dass der gemessene Gesamtstromwert IDC_g dem jeweilig gemessenen Stromwert I_mess entspricht.

Dann kann für den jeweiligen Motor der aktuelle Gesamtwiderstand der Stromstrecke berechnet werden mit Berücksichtigung sämtlicher Temperatur- und Toleranzabhängigkeiten, nämlich

$$Rg\_ist = \sqrt{\frac{(U\_bat \cdot PWM\_ist - ke \cdot \omega)^2 \cdot (PWM\_ist)^2}{I\_mess^2} - (L \cdot p \cdot \omega)^2} \hspace{2cm} [G4]$$

Dies bedeutet mit anderen Worten, dass aufgrund der Messung des Stromwertes der Gesamtwiderstand der Stromstrecke berechnet werden kann, der dann für die Bestimmung bzw. Begrenzung des Motorstrangstroms eines folgenden Zeitabschnitts unter Berücksichtigung des Soll-Motorstrangstroms, der wiederum aus dem jeweiligen Drehmomentenanforderungsprofil des Motors für den nachfolgenden Zeitabschnitt ermittelt werden kann, bestimmt werden kann. Es bedeutet dies mit anderen Worten, dass nach Kenntnis des Gesamtwiderstandes Rg_ist anhand von Gleichung [G4] der Motorstrangstrom anhand des kommenden Tastverhältnisses PWM_soll auf den von der Steuerschaltung festgelegten Soll-Motorstrangstrom I_soll, der sämtliche Haupt- und Grenzfunktionen beinhaltet, in Abhängigkeit von der Drehzahl w gesteuert werden kann, nämlich anhand von Gleichung 5 wie folgt:

$$PWM\_soll = \frac{I\_soll\sqrt{Rg\_ist + (L \cdot p \cdot \omega)^2} + ke \cdot \omega}{U\_BAT} \hspace{2cm} [G5]$$

Damit wird nun klar, dass der Motorstrangstrom eines folgenden Zeitabschnitts anhand des von der Steuerschaltung bestimmten Soll-Motorstrangstroms und des in einem vorherigen Zeitabschnitt ermittelten Gesamtwiderstands bestimmt werden kann.

Die erreichbare Genauigkeit dieser Stromsteuerung wird von den einzelnen Parametern bestimmt und der Genauigkeit der Strommessung. Nach einer besonders vorteilhaften Ausgestaltung des erfindungsgemäßen Verfahrens wird die Strommessung bei hoher Last durchgeführt mit dementsprechend hohem gemessenen Stromwert und bei einer Rotordrehzahl von $\omega = 0$, um den Einfluss der Motorkonstanten ke zu eliminieren.

Die Motorkonstante kann andererseits auch - im Rahmen einer gewissen Vereinfachung - als konstanter Wert in der Stromsteuerung angenommen werden, was zwar zu gewissen, aber beim jeweiligen Anwendungsfall möglicherweise noch tolerierbaren Fehlern führt.

Sofern ein solcher Fehler nicht tolerierbar ist, kann die Motorkonstante ke während eines Abgleichvorgangs mit hoher Drehzahl auch ermittelt werden und zwar anhand der nachfolgenden Gleichung

$$ke\_ist = \frac{U\_bat \cdot PWM\_ist + \frac{I\_mess}{PWM\_ist}\sqrt{Rg\_ist^2 + (L \cdot p \cdot \omega)^2}}{\omega} \hspace{2cm} [G6]$$

Wenn nunmehr ein derartiger Abgleichvorgang bei niedriger Last durchgeführt wird mit niedrig gemessenen Stromwert, so reduziert sich diese Gleichung [G6] zu

$$ke\_ist \cong \frac{U\_bat \cdot PWM\_ist}{\omega} \qquad [G7].$$

Damit wird mit dem erfindungsgemäßen Verfahren sämtlichen Produktionstoleranzen, Temperatureinflüssen und Lebensdauereffekten Rechnung getragen.

Vorstehend wurde bereits erläutert, dass das erfindungsgemäße Verfahren zur Begrenzung des Stromwerts in einer Stromstrecke angewandt werden kann, bei der der Elektromotor ein Betätigungsmotor einer Kupplung oder eines automatisierten Getriebes eines Kraftfahrzeugs ist.

Für diese unterschiedlichen Anwendungsfälle sind auch unterschiedliche Abgleichzustände möglich.

Wenn der Elektromotor beispielsweise ein Betätigungsmotor für die Kupplung eines automatisierten Schaltgetriebes ist, dann kann ein Abgleichvorgang dann durchgeführt werden, wenn der Schalt- bzw. Wählmotor des Getriebes nicht bestromt wird. Da die Strommessung vorteilhafter Weise bei hoher Last erfolgt, ist bei einem solchen Anwendungsfall eine Strommessung bei hoher Verfahrgeschwindigkeit der Kupplung, also hohem Lastzustand des Kupplungsbetätigungsmotors vorzuziehen, oder Zustände, bei denen die Drehzahl des Elektromotors ($\omega$) nahezu oder gleich Null ist.

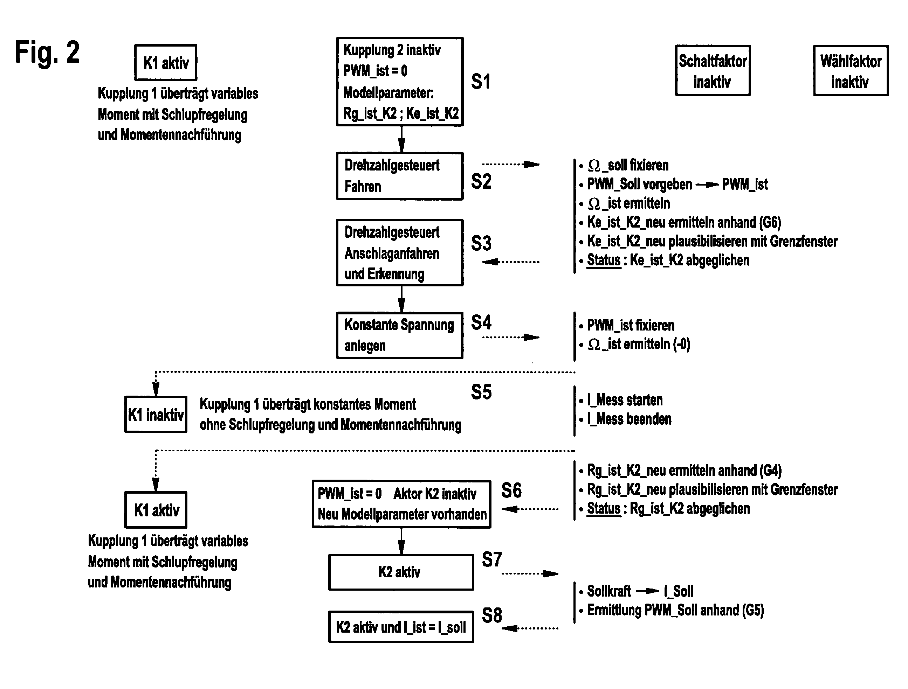

Wenn das Kraftfahrzeug ein Antriebskonzept mit zwei Kupplungen besitzt, so kann in einem solchen Anwendungsfall ein Abgleich eines beispielsweise Kupplungsbetätigungsmotors einer gerade bezüglich der Übertragung des Abtriebsmoments des Drehmoments nichtaktiven Kupplung durchgeführt werden. Es bedeutet dies mit anderen Worten, dass eine Kupplung gerade das Verbrennungsmotormoment vollständig überträgt und die dem abzugleichenden Motor zugeordnete Kupplung inaktiv ist. Ein solcher Fall wird nun unter Bezugnahme auf Fig. 2 der Zeichnung beschrieben werden. Dargestellt ist ein Anfahrvorgang mit der Kupplung 1 (K1 aktiv), während die Kupplung 2 (oder K2) inaktiv ist. In ähnlicher Weise sind während des Abgleichvorgangs des der Kupplung 2 zugeordneten Elektromotors der Schaltaktor inaktiv und auch der Wählaktor inaktiv.

In einem ersten Schritt S1 ist die Kupplung 2 inaktiv und das Ist-Tastverhältnis (PWM_ist) des der Kupplung 2 zugeordneten Motors ist 0. Von einem früheren Abgleichszustand ist der Gesamtwiderstand der Stromstrecke mit dem der Kupplung 2 zugeordneten Motor bekannt, ebenso die Motorkonstante, d.h. also Rg_ist_K2 ist bekannt und Ke_ist_K2 ist ebenfalls bekannt.

Um die Motorkonstante des der Kupplung K2 zugeordneten Motors zu ermitteln, wird in einem nächsten Schritt S2 drehzahlgesteuert die Kupplung verfahren, es bedeutet dies, dass eine Solldrehzahl $\Omega$_soll vorgegeben wird und ein Soll- Tastverhältnis PWM_soll. Unter Zuhilfenahme der Gleichung 2 kann das Ist-Tastverhältnis PWM_ist bestimmt werden und auch die tatsächliche Drehzahl $\Omega$_ist kann ermittelt werden. Damit lässt sich anhand der Gleichung [G6] die tatsächliche Motorkonstante Ke_ist_K2 ermitteln und anhand eines Grenzfensters plausibilisieren. Damit ist die Motorkonstante des der zweiten Kupplung K2 zugeordneten Motors abgeglichen.

In einem nächsten Schritt S3 wird drehzahlgesteuert ein Anschlag angefahren und kann, beispielsweise durch eine sprunghafte Zunahme des gemessenen Strangstroms, erkannt werden.

Dann wird in einem nächsten Schritt S4 ein Ist-Motortastverhältnis PWM_ist festgelegt und die Drehzahl $\Omega$_ist des Motors ermittelt, die aufgrund des Anschlags in etwa 0 ist. In einem nächsten Schritt S5 erfolgt die Stromwertmessung. Anhand der Gleichung [G4] kann dann der Gesamtwiderstand der Stromstrecke des der Kupplung K2 zugeordneten Motors, seiner Steuerschaftung und sämtlichen Anschlusselementen und dergleichen bestimmt werden. Befindet sich der so ermittelte Gesamtwiderstand dieser Stromstrecke innerhalb eines Grenzfensters (der errechnete Gesamtwiderstand kann so plausibilisiert werden) ist der Gesamtwiderstand Rg_ist_K2 abgeglichen und kann in die Bestimmung des Stromwerts für folgende Zeitabschnitte einfließen.

In einem nächsten Schritt S6 wird der der Kupplung K2 zugeordnete Aktor (=Betätigungsmotor der Kupplung 2 und seine Steuerschaltung) inaktiv geschaltet und aufgrund der Bestimmungen aktueller Werte der Motorkonstante Ke_ist_K2 und Rg_ist_K2 sind neue Modellparameter vorhanden. In einem nächsten Schritt S7 kann dann die Kupplung K2 wieder aktiviert werden und anhand der vom Betätigungsmotor der Kupplung K2 zu erbringenden Kraft bzw. seines zu erbringenden Drehmoments wird der Soll-Motorstrangstrom I_soll ermittelt, woraus sich das Soll-Motortastverhältnis PWM_soll anhand der vorstehenden Gleichung [G5] ermitteln lässt.

Die Kupplung K2 ist wieder aktiv und das Modell abgeglichen (Schritt S8).

Anhand der vorstehenden Schilderung wurde deutlich, dass derartige Abgleichvorgänge zur Ermittlung aktueller Parameter zu unterschiedlichen Zeitabschnitten stattfinden können, zwischen denen sich aber auch Temperaturveränderungen und damit Änderungen des Gesamtwiderstands der jeweiligen Stromstrecke ergeben können.

Bedingt durch diese Temperaturschwankungen ändert sich also auch der Gesamtwiderstand. Dieser kann aber nicht ständig durch die Strommessung ermittelt werden. Nach einer besonders vorteilhaften Ausgestaltung des Verfahrens wird dieser Tatsache dadurch Rechnung getragen, dass die Temperatur ermittelt wird, die die Stromstrecke zum Zeitpunkt der Strommessung hat. Über einen Temperaturkorrekturkoeffizienten kann der temperaturabhängige Gesamtwiderstand dann ausgehend vom aktuellen Ist-Widerstand bis zur nächsten Strommessung berechnet werden. Bei der nächsten Strommessung wird dann wieder der aktuell berechnete Wert auf den gemessenen Widerstand abgeglichen. Der Gesamtwiderstand der Stromstrecke setzt sich aus den Widerständen der einzelnen Bestandteile der Stromstrecke zusammen, also dem Widerstand der Steuerschaltung, dem Widerstand des Elektromotors und dem Widerstand sämtlicher Anschlusselemente, wie beispielsweise Zuleitungen, Stecker, Buchsen usw. in der Stromstrecke.

Der Gesamtwiderstand zur Bestimmung des Motorstrangstroms zwischen den einzelnen und nicht aber laufenden Abgleichvorgängen kann daher temperaturkompensiert werden, indem ein Temperaturkorrekturkoeffizient eingeführt wird, der den sich verändernden Temperaturverhältnissen Rechnung trägt.

Nach einer Strommessung wird der anhand der vorstehend wiedergegebenen Gleichung [G4] ermittelte Gesamtwiderstand verglichen mit einem rechnerisch ermittelten Gesamtwiderstand, der sich ergibt als:

$$Rg\_berechnet = R\_Zuleitung + R\_SG + R\_Motor \qquad [G8].$$

Es bedeutet dies mit anderen Worten, dass sich der berechnete Gesamtwiderstand Rg_berechnet ergibt als die Summe der Einzelwiderstände, der Zuleitung, der Steuerschaltung (SG = Steuergerät) und des Motors.

Ein Temperaturkorrekturkoeffizient kann ermittelt werden anhand der nachfolgenden Beziehung

$$Korrekturfaktor = Rg\_ist/Rg\_berechnet \qquad [G9].$$

Der temperaturabhängige Gesamtwiderstand der Stromstrecke kann dann in Zeitabschnitten zwischen Abgleichvorgängen temperaturkompensiert werden, indem der berechnete Gesamtwiderstand mit dem aus der Gleichung [G9] bestimmten Korrekturfaktor korrigiert wird. Damit ist der so korrigierte Gesamtwiderstand Grundlage für die Bestimmung des Stromwerts für einen neuen Zeitabschnitt.

**Patentansprüche**

1. Verfahren zur Steuerung des in einer Stromstrecke mit einem Elektromotor und einer Steuerschaltung sowie Anschlusselementen in einem Zeitabschnitt fließenden Stroms, **dadurch gekennzeichnet, dass** anhand eines in einem ersten Zeitabschnitt gemessenen Stromwerts der Gesamtwiderstand der Stromstrecke bestimmt wird und der Motorstrangstrom eines folgenden zweiten Zeitabschnitts anhand des Gesamtwiderstands und eines Sollmotorstrangstroms gesteuert wird.

2. Verfahren nach Anspruch 1, **dadurch gekennzeichnet, dass** der Motor strangstrom des zweiten Zeitabschnittes mittels des Motortastverhältnisses anhand folgender Beziehung bestimmt wird:

$$PWM\_soll = \frac{I\_soll\sqrt{Rg\_ist + (L \cdot p \cdot \omega)^2} + ke \cdot \omega}{U\_bat} \qquad [G5]$$

3. Verfahren nach Anspruch 1 oder 2, **dadurch gekennzeichnet, dass** der bestimmte Gesamtwiderstand solange als Gesamtwiderstand zur Steuerung des Motorstrangstroms verwendet wird, bis durch einen Abgleichvorgang ein neuer Gesamtwiderstand bestimmt wird.

4. Verfahren nach einem der Ansprüche 1 bis 3, **dadurch gekennzeichnet, dass** der Gesamtwiderstand in Zeitabschnitten zwischen Abgleichvorgängen mittels eines Temperaturkorrekturkoeffizienten korrigiert wird.

5. Verfahren nach Anspruch 4, **dadurch gekennzeichnet, dass** der Temperaturkorrekturkoeffizient ermittelt wird als Quotient eines gemessenen Gesamtwiderstands und eines errechneten Gesamtwiderstands.

6. Verfahren nach Anspruch 5, **dadurch gekennzeichnet, dass** der errechnete Gesamtwiderstand ermittelt wird als Summe der Widerstände der Anschlusselemente sowie der Steuerschaltung und des Elektromotors.

7. Verfahren nach Anspruch 6, **dadurch gekennzeichnet, dass** zur Ermittlung der Widerstände die Temperaturen der Anschlusselemente, der Steuerschaltung und des Elektromotors ermittelt werden und die Widerstände in Abhängigkeit der gemessenen Temperaturen ermittelt werden.

8. Verfahren nach einem der vorstehenden Ansprüche, **dadurch gekennzeichnet, dass** der Stromwert mit einer Strommesseinrichtung der Steuerschaltung gemessen wird.

9. Verfahren nach einem der vorstehenden Ansprüche, **dadurch gekennzeichnet, dass** die Strommessung bei hoher Motorlast und weitgehend Null entsprechender Drehzahl des Elektromotors durchgeführt wird.

10. Verwendung des Verfahrens nach einem der vorstehenden Ansprüche zur Begrenzung des in einem Elektromotor und seiner Steuerschaltung fließenden Stroms.

11. Verwendung des Verfahrens nach einem der vorstehenden Ansprüche, zur Begrenzung des in einer Stromstrecke mit einem Elektromotor und einer Steuerschaltung sowie Anschlusselementen fließenden Stroms, wobei der Elektromotor ein Betätigungsmotor einer Kupplung oder eines automatisierten Getriebes eines Fahrzeugs ist.

# Fig. 1

# Fig. 2

**K1 aktiv**

Kupplung 1 überträgt variables Moment mit Schlupfregelung und Momentennachführung

**Kupplung 2 inaktiv**
**PWM_ist = 0**
**Modellparameter:**
**Rg_ist_K2 ; Ke_ist_K2**   S1

**Schaltfaktor inaktiv**

**Wählfaktor inaktiv**

**Drehzahlgesteuert Fahren**   S2

- Ω_soll fixieren
- PWM_Soll vorgeben ⟶ PWM_ist
- Ω_ist ermitteln
- Ke_ist_K2_neu ermitteln anhand (G6)
- Ke_ist_K2_neu plausibilisieren mit Grenzfenster
- <u>Status</u> : Ke_ist_K2 abgeglichen

**Drehzahlgesteuert Anschlaganfahren und Erkennung**   S3

**Konstante Spannung anlegen**   S4

- PWM_ist fixieren
- Ω_ist ermitteln (-0)

S5

**K1 inaktiv**   Kupplung 1 überträgt konstantes Moment ohne Schlupfregelung und Momentennachführung

- I_Mess starten
- I_Mess beenden

**K1 aktiv**

Kupplung 1 überträgt variables Moment mit Schlupfregelung und Momentennachführung

**PWM_ist = 0   Aktor K2 inaktiv**
**Neu Modellparameter vorhanden**   S6

- Rg_ist_K2_neu ermitteln anhand (G4)
- Rg_ist_K2_neu plausibilisieren mit Grenzfenster
- <u>Status</u> : Rg_ist_K2 abgeglichen

**K2 aktiv**   S7

- Sollkraft ⟶ I_Soll
- Ermittlung PWM_Soll anhand (G5)

**K2 aktiv und I_ist = I_soll**   S8

EP 1 514 723 A2